# EUROPEAN PATENT APPLICATION

(11) **EP 4 387 348 A1**
(43) Date of publication of application: **19.06.2024**
(21) Application number: 21953062.3
(22) Date of filing: 09.08.2021
(51) Int. Cl.: H04W 64/00, H04W 4/02

(54) **POSITIONING METHOD AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/111631
(87) International publication number: WO 2023/015424

(57) **Abstract**

Disclosed in embodiments of the present invention are a positioning method and apparatus. The method is configured to be executed by a terminal device. The method comprises: the terminal device sends first indication information to an access network device, the first indication information being used for indicating at least one of the type of the terminal device and positioning reference signal measurement information. Thus, the terminal device sends the type of the terminal device or a corrected positioning reference signal measurement value to the access network device, so that a core network device can adjust a positioning algorithm on the basis of the type of the terminal device, or position the terminal device on the basis of the corrected positioning reference signal measurement value, thereby realizing accurate positioning of different types of terminal devices.

## Description

### FIELD

The present invention relates to the field of communication technologies, and in particular to a positioning method and device.

### BACKGROUND

In the communication system, various positioning technologies can be used to realize positioning of the terminal. For example, the positioning of the terminal may be realized by measuring a positioning reference signaling (PRS).

In related technologies, in the case where the terminals have similar capabilities, the measured values of the terminals or qualities of the positioning reference signaling sent by the terminals are similar, and thus all terminals can rely on a unified positioning algorithm for positioning. However, in the case where the terminals have different capabilities, even in the same geographic position, the measured values of different terminals or strengths of the positioning reference signaling sent by the different terminals may be different. If a unified positioning algorithm is still used for terminals of different types, the positioning may be inaccurate.

### SUMMARY

Embodiments of the present invention provide a positioning method and device, which may be applied to the technical field of the positioning service in the communication systems.

According to a first aspect of embodiments of the present invention, there is provided a positioning method, performed by a terminal, including: sending first indication information to an access network device. The first indication information is configured to indicate at least one of the followings: a type of the terminal, and positioning reference signaling measurement information.

In an embodiment, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

In an embodiment, the method further includes: determining the calibrated strength value of the positioning reference signaling by calibrating the measured strength value of the positioning reference signaling according to the type of the terminal; or determining the calibrated time difference of the arrival of the positioning reference signaling by calibrating the time difference of the arrival of the positioning reference signaling according to the type of the terminal.

According to a second aspect of embodiments of the present invention, there is provided a positioning method, performed by an access network device, including: receiving first indication information from a terminal, where the first indication information is configured to indicate at least one of the followings: a type of the terminal, and positioning reference signaling measurement information; and sending second indication information to a core network device, where the second indication information is generated according to the first indication information.

In an embodiment, the positioning reference signaling measurement information is a measured strength value of positioning reference signaling, and the method further includes: determining a calibrated strength value of the positioning reference signaling by calibrating the measured strength value of the positioning reference signaling according to the type of the terminal; and generating the second indication information according to the calibrated strength value of the positioning reference signaling.

In an embodiment, the positioning reference signaling measurement information is a measured time difference of arrival of positioning reference signaling, and the method further includes: determining a calibrated time difference of the arrival of the positioning reference signaling by calibrating the measured time difference of the arrival of the positioning reference signaling according to the type of the terminal; and generating the second indication information according to the calibrated time difference of the arrival of the positioning reference signaling.

In an embodiment, the second indication information is configured to indicate at least one of the followings: the type of the terminal, and the positioning reference signaling measurement information.

In an embodiment, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

According to a third aspect of embodiments of the present invention, there is provided a positioning method, performed by a core network device, including: receiving second indication information from an access network device, where the second indication information is configured to indicate at least one of the followings: a type of a terminal, and positioning reference signaling measurement information.

In an embodiment, the second indication information is configured to indicate the type of the terminal and the positioning reference signaling measurement information, the positioning reference signaling measurement information is a positioning reference signaling measurement value, and the method further includes: determining a positioning algorithm according to the type of the terminal; and determining a position of the terminal by processing the positioning reference signaling measurement value with the positioning algorithm.

In an embodiment, the second indication information is configured to indicate the type of the terminal and the positioning reference signaling measurement information, the positioning reference signaling measurement information is a positioning reference signaling measurement value, and the method further includes: calibrating the positioning reference signaling measurement value according to the type of the terminal; and determining a position of the terminal according to a calibrated positioning reference signaling measurement value.

In an embodiment, the positioning reference signaling measurement value includes: a measured strength value of positioning reference signaling, or a measured time difference of arrival of the positioning reference signal.

In an embodiment, the second indication information is configured to indicate positioning reference signaling measurement information, the positioning reference signaling measurement information is a calibrated positioning reference signaling measurement value, and the method further includes: determining a position of the terminal according to the calibrated positioning reference signaling measurement value.

In an embodiment, the calibrated positioning reference signaling measurement value includes: a calibrated strength value of positioning reference signaling, or a calibrated time difference of arrival of the positioning reference signaling.

In an embodiment, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

According to a fourth aspect of embodiments of the present invention, there is provided a communication device, having some or all functions of the terminal for realizing the method described in the first aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

According to a fifth aspect of embodiments of the present invention, there is provided a communication device, having some or all functions of the access network device for realizing the method described in the second aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

According to a sixth aspect of embodiments of the present invention, there is provided a communication device, having some or all functions of the core network for realizing the method described in the second aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

In an embodiment, the structure of each of the above devices may include a transceiving module and a processing module, and the processing module is configured to support the device to perform corresponding functions in the above methods. The transceiving module is configured to support communication between the device and other devices. The device may further include a storing module coupled with the transceiving module and the processing module, and configured to store necessary computer program and data of the communication device.

In an example, the processing module may be a processor, the transceiving module may be a transceiver or a communication interface, and the storing module may be a memory.

According to a seventh aspect of embodiments of the present invention, there is provided a communication device including a processor. When the processor invokes a computer program stored in a memory, the method described in the first aspect is performed.

According to an eighth aspect of embodiments of the present invention, there is provided a communication device including a processor. When the processor invokes a computer program stored in a memory, the method described in the second aspect is performed.

According to a ninth aspect of embodiments of the present invention, there is provided a communication device including a processor. When the processor invokes a computer program stored in a memory, the method described in the third aspect is performed.

According to a tenth aspect of embodiments of the present invention, there is provided a communication device. The communication device includes a processor and a memory storing a computer program that, when executed by the processor, causes the communication device to perform the method described in the first aspect.

According to an eleventh aspect of embodiments of the present invention, there is provided a communication device. The communication device includes a processor and a memory storing a computer program that, when executed by the processor, causes the communication device to perform the method described in the second aspect.

According to a twelfth aspect of embodiments of the present invention, there is provided a communication device. The communication device includes a processor and a memory storing a computer program that, when executed by the processor, causes the communication device to perform the method described in the third aspect.

According to a thirteenth aspect of embodiments of the present invention, there is provided a computer-readable storage medium having stored therein instructions for the above terminal. When the instructions are executed, the terminal performs the method described in the first aspect.

According to a fourteenth aspect of embodiments of the present invention, there is provided a computer-readable storage medium having stored therein instructions for the above access network device. When the instructions are executed, the network device performs the method described in the second aspect.

According to a fifteenth aspect of embodiments of the present invention, there is provided a computer-readable storage medium having stored therein instructions for the above core network device. When the instructions are executed, the network device performs the method described in the third aspect.

According to a sixteenth aspect of embodiments of the present invention, there is provided a computer program product including a computer program that, when run on a computer, causes the computer to perform the method described in the first aspect.

According to a seventeenth aspect of embodiments of the present invention, there is provided a computer program product including a computer program that, when run on a computer, causes the computer to perform the method described in the second aspect.

According to an eighteenth aspect of embodiments of the present invention, there is provided a computer program product including a computer program that, when run on a computer, causes the computer to perform the method described in the third aspect.

According to a nineteenth aspect of embodiments of the present invention, there is provided a chip system, including at least one processor and an interface, configured to support the terminal to realize the functions involved in the first aspect, for example, determine or process at least one of data and information involved in the above method. In a possible design, the chip system further includes a memory, and the memory is configured to store necessary computer programs and data of the terminal. The chip system may be formed by a chip, or may include a chip and other discrete devices.

According to a twentieth aspect of embodiments of the present invention, there is provided a chip system, including at least one processor and an interface, configured to support the access network device to realize the functions involved in the second aspect, for example, determine or process at least one of data and information involved in the above method. In a possible design, the chip system further includes a memory, and the memory is configured to store necessary computer programs and data of the network device. The chip system may be formed by a chip, or may include a chip and other discrete devices.

According to a twenty-first aspect of embodiments of the present invention, there is provided a chip system, including at least one processor and an interface, configured to support the core network device to realize the functions involved in the third aspect, for example, determine or process at least one of data and information involved in the above method. In a possible design, the chip system further includes a memory, and the memory is configured to store necessary computer programs and data of the network device. The chip system may be formed by a chip, or may include a chip and other discrete devices.

According to a twenty-second aspect of embodiments of the present invention, there is provided a computer program that, when run on a computer, causes the computer to perform the method described in the first aspect.

According to a twenty-third aspect of embodiments of the present invention, there is provided a computer program that, when run on a computer, causes the computer to perform the method described in the second aspect.

According to a twenty-fourth aspect of embodiments of the present invention, there is provided a computer program that, when run on a computer, causes the computer to perform the method described in the third aspect.

### BRIEF DESCRIPTION OF THE DRAWINGS

In order to clearly illustrate the technical solutions in the embodiments of the present invention or the related art, drawings applied to the embodiments of the present invention or the related art are described below.
FIG. 1 is a schematic diagram of an architecture of a communication system provided by an embodiment of the present invention.
FIG. 2 is a flowchart of a positioning method provided by an embodiment of the present invention.
FIG. 3 is a flowchart of a positioning method provided by an embodiment of the present invention.
FIG. 4 is a flowchart of a positioning method provided by an embodiment of the present invention.
FIG. 5 is a flowchart of a positioning method provided by an embodiment of the present invention.
FIG. 6 is a flowchart of a positioning method provided by an embodiment of the present invention.
FIG. 7 is a flowchart of a positioning method provided by an embodiment of the present invention.
FIG. 8 is a flowchart of a positioning method provided by an embodiment of the present invention.
FIG. 9 is a flowchart of a positioning method provided by an embodiment of the present invention.
FIG. 10 is a block diagram of a communication device provided by an embodiment of the present invention.
FIG. 11 is a block diagram of a communication device provided by another embodiment of the present invention.
FIG. 12 is a block diagram of a chip provided by an embodiment of the present invention.

### DETAILED DESCRIPTION

In order to better understand the positioning method disclosed in the embodiment of the present invention, the communication system to which the embodiment of the present invention is applicable is firstly described below.

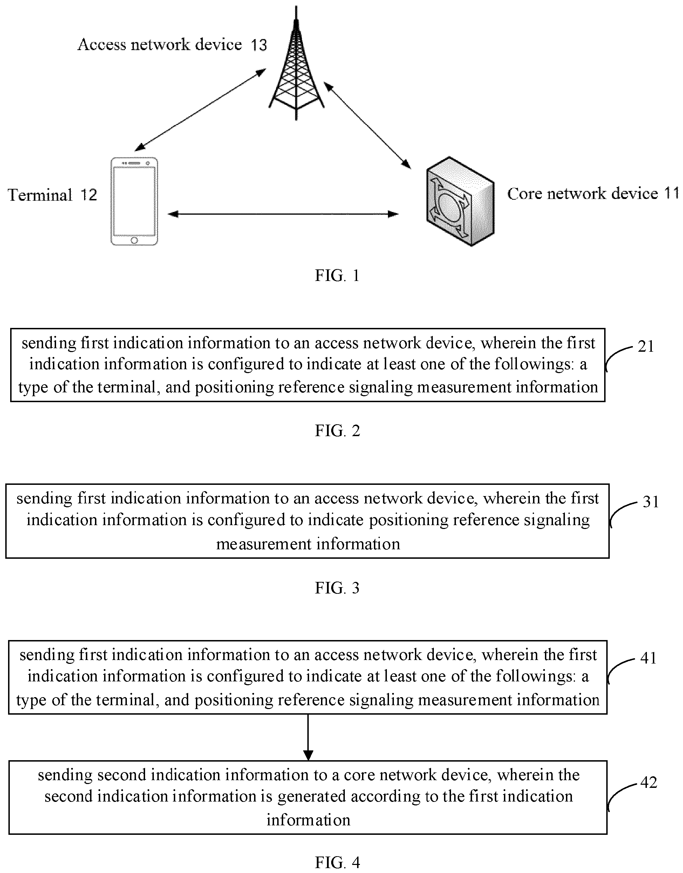

Referring to FIG. 1, FIG. 1 is a schematic diagram of an architecture of a communication system provided by an embodiment of the present invention. The communication system may include, but not limited to, an access network device, a core network device, and a terminal. The number and form of the devices shown in FIG. 1 are only example and do not constitute a limitation to the embodiments of the present invention. In practical applications, the system may include two or more access network devices, two or more terminals, and two or more core network devices. In an example, the communication system shown in FIG. 1 includes one core network device 11, one terminal 12 and one access network device 13.

It should be noted that the technical solutions of the embodiments of the present invention may be applied to various communication systems, for example, a long term evolution (LTE) system, a fifth generation (5G) mobile communication system, a 5G new radio (NR) system, or other future new mobile communication systems. A base station 13 in the embodiments of the present invention is an entity on the network for transmitting or receiving signals. For example, the access network device 13 may be an evolved NodeB (eNB), a next generation NodeB (gNB) in an NR system, a base station in other future mobile communication systems, or a wireless fidelity (Wi-Fi) access nodes in the system. Specific technologies and specific device forms adopted by the network device are not limited in the embodiments of the present invention.

The core network device 11 and the access network device 13 provided in the embodiments of the present invention may be composed of a central unit (CU) and a distributed unit (DU), where the CU may also be called a control unit. The CU-DU structure may divide the network equipment, such as protocol layers of the base station, and functions of some protocol layers are arranged in the CU for centralized control, and functions of a part of or all the remaining protocol layers are distributed in the DU(s), and the CU centrally controls the DU(s).

The terminal 12 in the embodiments of the present invention is an entity on the user side for receiving or transmitting signals, such as a mobile phone. The terminal may also be called a terminal device, a user equipment (UE), a mobile station (MS), and a mobile terminal (MT). The terminal may be a car with a communication function, a smart car, a mobile phone, a wearable device, a pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in safe transportation, a wireless terminal in a smart city, or a wireless terminal in a smart home. Specific technologies and specific device forms adopted by the terminal are not limited in the embodiments of the present invention.

It can be understood that the communication system described in the embodiments of the present invention is to illustrate the technical solutions of the embodiments of the present invention more clearly, and does not constitute a limitation on the technical solutions provided by the embodiments of the present invention. With the evolution of the system architecture and the emergence of new business scenarios, the technical solutions provided by the embodiments of the present invention are applicable to similar technical problems.

The positioning method and device provided by the present invention will be described in detail below with reference to the accompanying drawings.

Referring to FIG. 2, FIG. 2 is a flowchart of a positioning method provided by an embodiment of the present invention. The method is performed by a terminal. As shown in FIG. 2, the method may include, but not limited to, the following step:

In block 21, first indication information is sent to an access network device, the first indication information is configured to indicate at least one of the followings: a type of the terminal, and positioning reference signaling measurement information.

Types of the terminal may be classified into a reduced capability terminal (RedCap UE) and a normal terminal according to the capability of the terminal. The normal terminal may also be called non-reduced capability UE or a terminal with a normal capability, which is not limited in the present invention.

Generally, there may be only one receiving antenna for the reduced capability terminal. In addition, the reduced capability terminal may have a relatively small size and a low antenna radiation efficiency. Even in the same geographical position, a signal strength sent by the reduced capability terminal will be lower than that of the normal capacity terminal. Therefore, in the present invention, during the positioning process, the terminal may report its type and/or positioning reference signaling measurement information to the base station, so that the network device may select an appropriate positioning algorithm according to the type of the terminal to position the terminal.

Optionally, the positioning reference signaling measurement information may be a positioning reference signaling measurement value (i.e., a measured value of positioning reference signaling) determined by the terminal. That is, the positioning reference signaling measurement information may be at least one of the followings: a measured strength value of the positioning reference signaling; a measured time difference of arrival of the positioning reference signaling.

The measured strength value of the positioning reference signaling may be a received power of the positioning reference signaling measured by the terminal.

The measured time difference of the arrival of the positioning reference signaling may be a time difference, measured by the terminal, between a moment that the positioning reference signaling is received and a moment that the positioning reference signaling is sent.

It should be noted that if the first indication information is only configured to indicate the type of the terminal, in order to realize positioning, the terminal further needs to send the measured value of the positioning reference signaling, such as the measured strength value of the positioning reference signaling or the measured time difference of the arrival of the positioning reference signaling to the access network device.

By implementing the embodiments of the present invention, the terminal sends the first indication information to the access network device, the first indication information is configured to indicate at least one of the followings: the type of the terminal, and the measured value of the positioning reference signaling. Accordingly, the terminal sends its type and the measured value of the positioning reference signaling to the access network device, to allow the core network device to adjust the positioning algorithm based on the type of the terminal to locate the terminal, thus realizing accurate positioning for terminals of different types.

Referring to FIG. 3, FIG. 3 is a flowchart of a positioning method provided by another embodiment of the present invention. The method is performed by a terminal. As shown in FIG. 3, the method may include, but not limited to, the following step.

In block 31, first indication information is sent to an access network device, the first indication information is configured to indicate positioning reference signaling measurement information.

Optionally, the positioning reference signaling measurement information may be a calibrated value obtained after the measured value of the positioning reference signaling of the terminal has been calibrated according to the type of the terminal, that is, the positioning reference signaling measurement information may be at least one of the followings: a calibrated strength value of the positioning reference signaling; and a calibrated time difference of the arrival of the positioning reference signaling.

Optionally, the terminal may calibrate the measured strength value of the positioning reference signaling according to the type of the terminal, to determine the calibrated strength value of the positioning reference signaling.

Optionally, the terminal may also calibrate the measured time difference of the arrival of the positioning reference signaling according to the type of the terminal, to determine the calibrated time difference of the arrival of the positioning reference signaling.

It should be noted that calibration manners corresponding to the measured strength value of the positioning reference signaling or the measured time difference of the arrival of the positioning reference signaling may be different for terminals of different types.

Optionally, the terminal may determine the calibration manners corresponding to terminals of different types according to protocol agreements or through negotiation with the access network device and the core network device.

For example, if the type of the terminal is a reduced capability terminal, since the reduced capability terminal has only one receiving antenna and the radiation efficiency of the receiving antenna is low, errors may exist in the measured strength value of the positioning reference signaling or the measured time difference of the arrival of the positioning reference signaling obtained. Therefore, the measured strength value of the positioning reference signaling may be added with a certain value as the calibrated strength value of the positioning reference signaling, or the measured time difference of the arrival of the positioning reference signaling may be added with a certain time period as a calibrated time difference of the arrival of the positioning reference signaling.

Alternatively, if the type of the terminal is a terminal with a normal capability, the measured strength value of the positioning reference signaling does not need to be calibrated.

It can be understood that after the terminal calibrates the strength value of the positioning reference signaling or the measured time difference of the arrival of the positioning reference signaling, measurement errors for the positioning reference signaling corresponding to terminals of different types are eliminated. Therefore, the core network device may process the calibrated strength value of the positioning reference signaling or the calibrated time difference of the arrival of the positioning reference signaling that has been received according to the unified positioning algorithm or positioning model, to realize the accurate positioning of the terminals of different types.

By implementing the embodiments of the present invention, the terminal sends the first indication information to the access network device, and the first indication information is configured to indicate the calibrated positioning reference signaling measurement value. Therefore, the terminal sends the calibrated positioning reference signaling measurement value to the access network device to allow the core network device to locate the terminal based on the calibrated positioning reference signaling measurement value, thereby realizing the accurate positioning of the terminals of different types.

Referring to FIG. 4, FIG. 4 is a flowchart of a positioning method provided by a further embodiment of the present invention. The method is performed by an access network device. As shown in FIG. 4, the method may include, but not limited to, the following steps.

In block 41, first indication information is received from a terminal, the first indication information is configured to indicate at least one of the followings: a type of the terminal, and positioning reference signaling measurement information.

Types of the terminal may be classified into a reduced capability terminal (RedCap UE) and a normal terminal according to the capability of the terminal. The normal terminal may also be called non-reduced capability UE or a terminal with a normal capability, which is not limited in the present invention.

Optionally, the positioning reference signaling measurement information may be a positioning reference signaling measurement value (i.e., a measured value of positioning reference signaling) determined by the terminal or a calibrated positioning reference signaling measurement value. That is, the positioning reference signaling measurement information may be at least one of the followings: a measured strength value of the positioning reference signaling, a measured time difference of arrival of the positioning reference signaling, a calibrated strength value of the positioning reference signaling, and a calibrated time difference of the arrival of the positioning reference signaling.

The measured strength value of the positioning reference signaling may be a received power of the positioning reference signaling measured by the terminal.

The measured time difference of the arrival of the positioning reference signaling may be a time difference, measured by the terminal, between a moment that the positioning reference signaling is received and a moment that the positioning reference signaling is sent.

The calibrated strength value of the positioning reference signaling may be determined by the terminal calibrating the measured strength value of the positioning reference signaling according to the type of the terminal.

The calibrated time difference of the arrival of the positioning reference signaling may be determined by the terminal calibrating the measured time difference of the arrival of the positioning reference signaling according to the type of the terminal.

In block 42, second indication information is sent to a core network device, and the second indication information is generated according to the first indication information.

Optionally, the second indication information is configured to indicate at least one of the followings: the type of the terminal, and the positioning reference signaling measurement information.

It can be understood that, after receiving the first indication information sent by the terminal, the access network device may generate the second indication information based on the first indication information, and send the second indication information to the core network device.

Optionally, the first indication information is the type of the terminal and the measured value of the positioning reference signaling, and the access network device may calibrate the measured value of the positioning reference signaling according to the type of the terminal to generate the second indication information, or the access network device may directly use the first indication information as the second indication information without calibrating the measured value of the positioning reference signaling.

Optionally, the first indication information is the calibrated positioning reference signaling measurement value, the access network device may generate the second indication information without further processing the first indication information, and the second indication information is configured to indicate the calibrated positioning reference signaling measurement value.

By implementing the embodiments of the present invention, the access network device receives the first indication information from the terminal, where the first indication information is configured to indicate at least one of the followings: the type of the terminal, and the positioning reference signaling measurement information. Further, the access network device sends the second indication information generated according to the first indication information to the core network device. Therefore, the access network device sends the type of the terminal or the calibrated positioning reference signaling measurement value to the core network device, to allow the core network device to adjust the positioning algorithm based on the type of the terminal, or to locate the terminal based on the calibrated positioning reference signaling measurement value, thus realizing the accurate positioning of the terminals of different types.

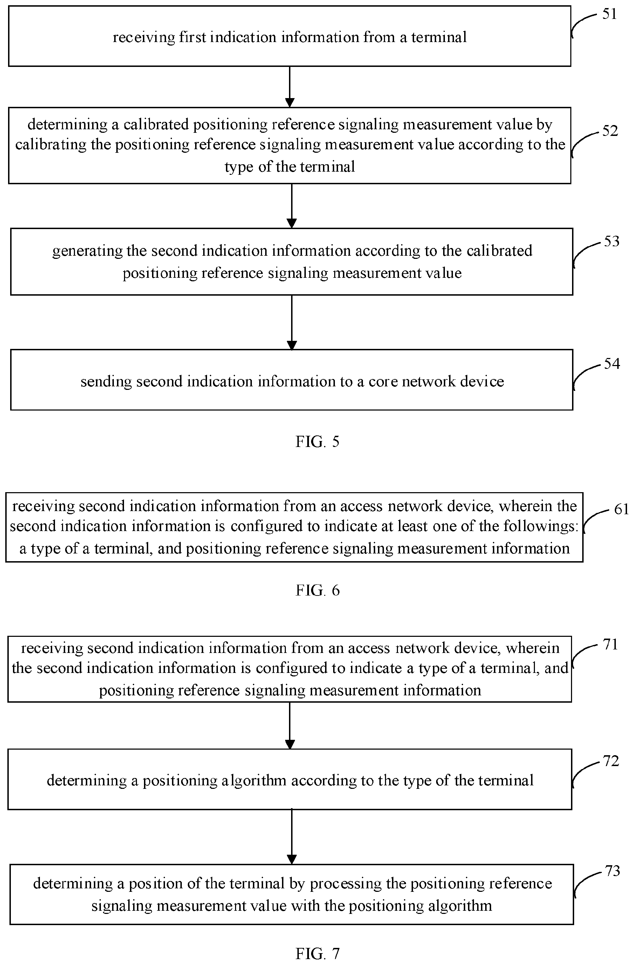

Referring to FIG. 5, FIG. 5 is a flowchart of a positioning method provided by a further embodiment of the present invention. The method is configured to be performed by an access network device. As shown in Figure 5, the method may include, but not limited to, the following steps.

In block 51, first indication information is received from a terminal.

The first indication information is configured to indicate at least one of the followings: a type of the terminal, and a positioning reference signaling measurement value.

The positioning reference signaling measurement value may include: a measured strength value of the positioning reference signaling, and/or a measured time difference of arrival of the positioning reference signaling.

For the specific implementations of the step in block 51, details may be referred to the detailed descriptions for other embodiments of the present invention, which are not elaborated here.

In block 52: a calibrated positioning reference signaling measurement value is determined by calibrating the positioning reference signaling measurement value according to the type of the terminal.

Optionally, the calibrated positioning reference signaling measurement value may include: a calibrated strength value of the positioning reference signaling, and/or a calibrated time difference of the arrival of the positioning reference signaling.

It can be understood that due to the different capabilities of the terminals of different types, there may be different errors in the obtained positioning reference signaling measurement value. Therefore, after receiving the first indication information configured to indicate the type of the terminal and the positioning reference signaling measurement value, the access network device may calibrate the positioning reference signaling measurement value according to the type of the terminal, to determine the calibrated positioning reference signaling measurement value.

Optionally, the access network device may determine manners of calibrating the positioning reference signaling measurement value for terminals of different types according to protocol agreements, or through negotiation with the terminal and the core network device.

Optionally, if the positioning reference signaling measurement value is a measured strength value of the positioning reference signaling, the access network device calibrates the measured strength value of the positioning reference signaling according to the type of the terminal, to determine a calibrated strength value of the positioning reference signaling.

Optionally, if the positioning reference signaling measurement value is a measured time difference of arrival of the positioning reference signaling, the access network device calibrates the measured time difference of the arrival of the positioning reference signaling according to the type of the terminal, to determine the calibrated time difference of the arrival of the positioning reference signaling. For example, if the type of the terminal is a reduced capability terminal, a certain value may be added to the measured strength value of the positioning reference signaling to be the calibrated strength value of the positioning reference signaling, where the certain value may be 2 dB, 3dB, etc., which is not limited in the present invention. Alternatively, a certain time period may be added to the measured time difference of the arrival of the positioning reference signaling to be the calibrated time difference of the arrival of the positioning reference signaling, where the certain time period may be 2s, 3s, etc., which is not limited in the present invention.

In block 53, the second indication information is generated according to the calibrated positioning reference signaling measurement value.

Optionally, the second indication information is configured to indicate the calibrated positioning reference signaling measurement value corresponding to the terminal.

In block 54, the second indication information is sent to the core network device.

For the specific implementations of the step in block 54, details may be referred to the detailed descriptions for other embodiments of the present invention, which are not elaborated here.

By implementing the embodiments of the present invention, the access network device receives the first indication information from the terminal, calibrates the positioning reference signaling measurement value according to the type of the terminal to determine the calibrated positioning reference signaling measurement value, generates the second indication information according to the calibrated positioning reference signaling measurement value, and sends the second indication information to the core network device. Therefore, the access network device sends the calibrated positioning reference signaling measurement value to the core network device, to allow the core network device to locate the terminal based on the calibrated positioning reference signaling measurement value, thereby realizing the accurate positioning of the terminals of different types.

Referring to FIG. 6, FIG. 6 is a flowchart of a positioning method provided by a further embodiment of the present invention. The method is performed by a core network device. As shown in FIG. 6, the method may include, but not limited to, the following step.

In block 61, second indication information is received from an access network device, and the second indication information is configured to indicate at least one of the followings: a type of a terminal, and positioning reference signaling measurement information.

Types of the terminal may be classified into a reduced capability terminal (RedCap UE) and a normal terminal according to the capability of the terminal. The normal terminal may also be called non-reduced capability UE or a terminal with a normal capability, which is not limited in the present invention.

Optionally, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

The measured strength value of the positioning reference signaling may be a received power of the positioning reference signaling measured by the terminal.

The measured time difference of the arrival of the positioning reference signaling may be a time difference, measured by the terminal, between a moment that the positioning reference signaling is received and a moment that the positioning reference signaling is sent.

Optionally, the calibrated strength value of the positioning reference signaling may be determined by the terminal calibrating the measured strength value of the positioning reference signaling according to the type of the terminal, or may be determined by the access network device calibrating the measured strength value of the positioning reference signaling according to the type of the terminal.

Optionally, the calibrated time difference of the arrival of the positioning reference signaling may be determined by the terminal calibrating the measured time difference of the arrival of the positioning reference signaling according to the type of the terminal, or may be determined by the access network device calibrating the measured time difference of the arrival of the positioning reference signaling.

It can be understood that, after receiving the second indication information from the access network device, the core network device may locate terminals of different types in different ways according to the second indication information, which improves the accuracy of terminal positioning.

By implementing the embodiments of the present invention, the core network device receives the second indication information from the access network device, where the second indication information is configured to indicate at least one of the followings: the type of the terminal, and the positioning reference signaling measurement information. Therefore, the core network device may adjust the positioning algorithm based on the type of the terminal, or locate the terminal based on the calibrated positioning reference signaling measurement value, thereby realizing accurate positioning of the terminals of different types.

Referring to FIG. 7, FIG. 7 is a flowchart of a positioning method provided by a further embodiment of the present invention. The method is performed by a core network device. As shown in FIG. 7, the method may include, but not limited to, the following steps.

In block 71, second indication information is received from an access network device, and the second indication information is configured to indicate a type of a terminal, and a positioning reference signaling measurement value.

Optionally, the positioning reference signaling measurement value (i.e., the measured value of the positioning reference signal) may include: a measured strength value of the positioning reference signaling, and/or a measured time difference of arrival of the positioning reference signal.

For the specific implementations of the step in block 71, details may be referred to the detailed descriptions for other embodiments of the present invention, which are not elaborated here.

In block 72, a positioning algorithm is determined according to the type of the terminal.

It can be understood that terminals of different types have different corresponding positioning algorithms.

In block 73, a position of the terminal is determined by processing the positioning reference signaling measurement value with the positioning algorithm.

It can be understood that terminals of different types have different corresponding capabilities, and errors of the measured positioning reference signaling measurement value are different. If a unified positioning algorithm is used to process the positioning reference signaling measurement values, positions of terminals of different types may have a large error. Therefore, the core network device needs to determine different positioning algorithms for terminals of different types, to process the measured value of the positioning reference signaling according to the type of the terminal, thus making the determined position of the terminal more accurate.

By implementing the embodiments of the present invention, the core network device receives the second indication information configured to indicate the type of the terminal and the positioning reference signaling measurement value from the access network device, determines the positioning algorithm according to the type of the terminal, and determining the position of the terminal by processing the positioning reference signaling measurement value with the positioning algorithm. Therefore, the core network device adopts different positioning algorithms to process the positioning reference signaling measurement values measured by terminals of different types, thereby realizing accurate positioning for terminals of different types.

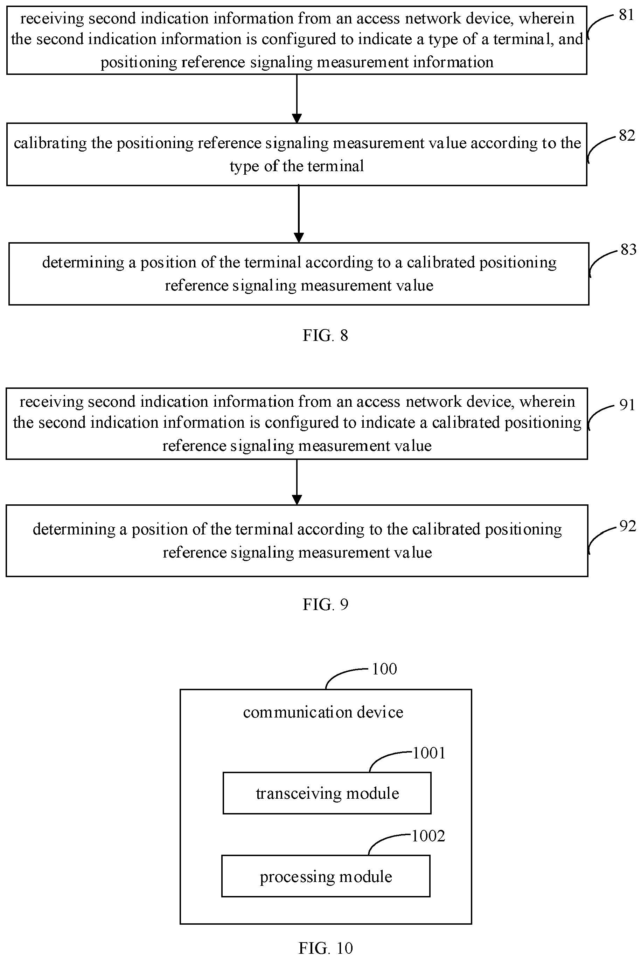

Referring to FIG. 8, FIG. 8 is a flowchart of a positioning method provided by a further embodiment of the present invention. The method is performed by a core network device. As shown in FIG. 8, the method may include, but not limited to, the following steps.

In block 81, second indication information is received from an access network device, and the second indication information is configured to indicate a type of a terminal, and a positioning reference signaling measurement value.

Optionally, the positioning reference signaling measurement value (i.e., the measured value of the positioning reference signal) may include: a measured strength value of the positioning reference signaling, and/or a measured time difference of arrival of the positioning reference signal.

For the specific implementations of the step in block 81, details may be referred to the detailed descriptions for other embodiments of the present invention, which are not elaborated here.

In block 82, the positioning reference signaling measurement value is calibrated according to the type of the terminal.

Optionally, the core network device may determine manners of calibrating the positioning reference signaling measurement value for terminals of different types according to protocol agreements, or through negotiation with the terminal and the access network device.

For example, if the type of the terminal is a reduced capability terminal, a certain value may be added to the measured strength value of the positioning reference signaling to be the calibrated strength value of the positioning reference signaling, where the certain value may be 2 dB, 3dB, etc., which is not limited in the present invention. Alternatively, a certain time period may be added to the measured time difference of the arrival of the positioning reference signaling to be the calibrated time difference of the arrival of the positioning reference signaling, where the certain time period may be 2s, 3s, etc., which is not limited in the present invention.

In block 83, a position of the terminal is determined according to a calibrated positioning reference signaling measurement value.

It can be understood that with the calibrated positioning reference signaling measurement value, positioning reference signaling measurement errors for terminals of different types are eliminated. Therefore, the core network device may process the calibrated positioning reference signaling measurement value based on a unified positioning algorithm, to determine the position for terminals of different types.

By implementing the embodiments of the present invention, the core network device receives the second indication information configured to indicate the type of the terminal and the positioning reference signaling measurement value from the access network device, calibrates the positioning reference signaling measurement value according to the type of the terminal, and determining the position of the terminal according to the calibrated positioning reference signaling measurement value. Therefore, the core network device calibrates the positioning reference signaling measurement value based on the type of the terminal, and processes the calibrated positioning reference signaling measurement values, thereby realizing the accurate positioning of the terminals of different types.

Referring to FIG. 9, FIG. 9 is a flowchart of a positioning method provided by a further embodiment of the present invention. The method is performed by a core network device. As shown in FIG. 9, the method may include, but not limited to, the following steps.

In block 91: second indication information is received from an access network device, and the second indication information is configured to indicate a calibrated positioning reference signaling measurement value.

Optionally, the calibrated positioning reference signaling measurement value may include: a calibrated strength value of positioning reference signaling, or a calibrated time difference of arrival of the positioning reference signaling.

For the specific implementations of the step in block 91, details may be referred to the detailed descriptions for other embodiments of the present invention, which are not elaborated here.

In block 92, a position of the terminal is determined according to the calibrated positioning reference signaling measurement value.

For the specific implementations of the step in block 92, details may be referred to the detailed descriptions for other embodiments of the present invention, which are not elaborated here.

By implementing the embodiments of the present invention, the core network device receives the second indication information configured to indicate the calibrated positioning reference signaling measurement value from the access network device, and determines the position of the terminal according to the calibrated positioning reference signaling measurement value. Therefore, the core network device may use a unified positioning algorithm to process the calibrated positioning reference signaling measurement values of terminals of different types, thereby realizing accurate positioning for terminals of different types.

In the above embodiments provided in the present invention, the methods provided in the embodiments of the present invention are introduced from the perspectives of the core network device, the terminal, and the access network device respectively. In order to realize the various functions in the methods provided by the above-mentioned embodiments of the present invention, the core network device, the terminal, and the access network device may include a hardware structure and a software module, and the above functions may be realized in the form of the hardware structure, the software module, or the hardware structure plus the software module. A certain function among the above-mentioned functions may be implemented in the form of the hardware structure, the software module, or the hardware structure plus the software module.

Referring to FIG. 10, FIG. 10 is a block diagram of a communication device 100 provided by an embodiment of the present invention. The communication device 100 shown in FIG. 10 may include a transceiving module 1001 and a processing module 1002. The transceiving module 1001 may include a transmitting module and/or a receiving module, the transmitting module is configured to realize a transmitting function, the receiving module is configured to realize a receiving function, and the transceiving module 1001 may realize the transmitting function and/or the receiving function.

The communication device 100 may be a terminal (such as the terminal in the foregoing method embodiments), may also be a device in the terminal, and may also be a device that may be matched and used with the terminal. Alternatively, the communication device 100 may be an access network device (such as the access network device in the foregoing method embodiments), may also be a device in the access network device, or may be a device that may be matched and used with the access network device. Alternatively, the communication device 100 may also be a core network device, may also be a device in the core network device, and may also be a device that may be matched and used with the core network device.

Specifically, the communication device 100 is a terminal (such as the terminal in the foregoing method embodiments), and a transceiving module 1001 is configured to send first indication information to an access network device. The first indication information is configured to indicate at least one of the followings: a type of the terminal, and positioning reference signaling measurement information.

Optionally, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

Optionally, the processing module 1002 is configured to: determine the calibrated strength value of the positioning reference signaling by calibrating the measured strength value of the positioning reference signaling according to the type of the terminal; or determine the calibrated time difference of the arrival of the positioning reference signaling by calibrating the time difference of the arrival of the positioning reference signaling according to the type of the terminal.

With the communication device provided in the present invention, the terminal sends the first indication information to the access network device, the first indication information is configured to indicate at least one of the followings: the type of the terminal, and the measured value of the positioning reference signaling. Accordingly, the terminal sends its type and the calibrated positioning reference signaling measurement value to the access network device, to allow the core network device to adjust the positioning algorithm based on the type of the terminal to locate the terminal, thus realizing accurate positioning for terminals of different types.

Alternatively, the communication is an access network device (such as the access network device in the foregoing method embodiments), the transceiving module 1001 is configured to receive first indication information from a terminal. The first indication information is configured to indicate at least one of the followings: a type of the terminal, and positioning reference signaling measurement information. The transceiving module 1001 is further configured to send second indication information to a core network device. The second indication information is generated according to the first indication information.

Optionally, the communication device 100 further includes a processing module 1002 configured to determine a calibrated strength value of positioning reference signaling by calibrating a measured strength value of the positioning reference signaling according to the type of the terminal.

The processing module 1002 is further configured to generate the second indication information according to the calibrated strength value of the positioning reference signaling.

Optionally, the processing module 1002 is further configured to: determine a calibrated time difference of arrival of positioning reference signaling by calibrating a measured time difference of the arrival of the positioning reference signaling according to the type of the terminal; and generate the second indication information according to the calibrated time difference of the arrival of the positioning reference signaling.

Optionally, the second indication information is configured to indicate at least one of the followings: the type of the terminal, and the positioning reference signaling measurement information.

Optionally, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

With the communication device provided in the present invention, the access network device receives the first indication information from the terminal, where the first indication information is configured to indicate at least one of the followings: the type of the terminal, and the positioning reference signaling measurement information. Further, the access network device sends the second indication information generated according to the first indication information to the core network device. Therefore, the access network device sends the type of the terminal or the calibrated positioning reference signaling measurement value to the core network device, to allow the core network device to adjust the positioning algorithm based on the type of the terminal, or to locate the terminal based on the calibrated positioning reference signaling measurement value, thus realizing the accurate positioning of the terminals of different types.

Alternatively, the communication is a core network device (such as the core network device in the foregoing method embodiments), the transceiving module 1001 is configured to receive second indication information from an access network device. The second indication information is configured to indicate at least one of the followings: a type of a terminal, and positioning reference signaling measurement information.

Optionally, the communication device 100 further includes: the processing module 1002 configured to determine a positioning algorithm according to the type of the terminal.

The processing module 1002 is further configured to determine a position of the terminal by processing a positioning reference signaling measurement value with the positioning algorithm.

Optionally, the processing module 1002 is specifically configured to: calibrate a positioning reference signaling measurement value according to the type of the terminal; and determine a position of the terminal according to a calibrated positioning reference signaling measurement value.

Optionally, the positioning reference signaling measurement value includes: a measured strength value of positioning reference signaling, or a measured time difference of arrival of the positioning reference signal.

Optionally, the processing module 1002 is further configured to: determine a position of the terminal according to a calibrated positioning reference signaling measurement value.

Optionally, the calibrated positioning reference signaling measurement value includes: a calibrated strength value of positioning reference signaling, or a calibrated time difference of arrival of the positioning reference signaling.

Optionally, the positioning reference signaling measurement information is at least one of the followings: a measured strength value of positioning reference signaling; a measured time difference of arrival of the positioning reference signaling; a calibrated strength value of the positioning reference signaling; and a calibrated time difference of the arrival of the positioning reference signaling.

With the communication device provided in the present invention, the core network device receives the second indication information from the access network device, where the second indication information is configured to indicate at least one of the followings: the type of the terminal, and the positioning reference signaling measurement information. Therefore, the core network device may adjust the positioning algorithm based on the type of the terminal, or locate the terminal based on the calibrated positioning reference signaling measurement value, thereby realizing accurate positioning of the terminals of different types.

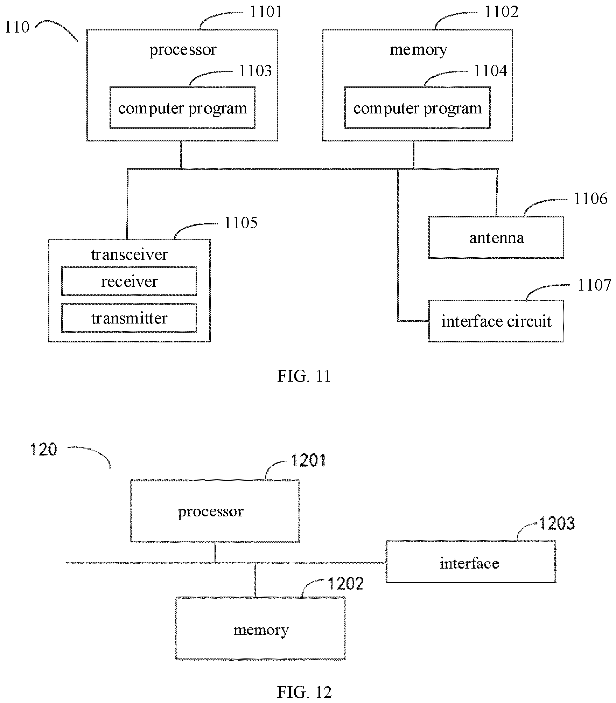

Referring to FIG. 11, FIG. 11 is a block diagram of a communication device 110 provided by another embodiment of the present invention. The communication device 110 may be a network device, or a terminal (such as the terminal in the aforementioned method embodiments), or may be a chip, a chip system, or a processor that supports the network device to implement the above method, or may be a chip, a chip system, or a processor that supports the terminal to implement the above method. The device may be configured to implement the methods described in the above method embodiments, and the details may be referred to the description corresponding to the above method embodiments.

The communication device 110 may include at least one processor 1101. The processor 1101 may be a general-purpose processor or a special-purpose processor. For example, it may be a baseband processor or a central processing unit. The baseband processor may be configured to process communication protocols and communication data, and the central processing unit may be configured to control the communication device (such as a base station, a baseband chip, a terminal, a terminal chip, a DU or a CU), execute computer program(s), and process data for the computer program(s).

Optionally, the communication device 110 may further include at least one memory 1102, on which a computer program 1104 may be stored, and the processor 1101 executes the computer program 1104 to cause the communication device 110 to perform the method as described in the above method embodiments. Optionally, the memory 1102 may also have the data stored therein. The communication device 110 and the memory 1102 may be provided independently or integrated together.

Optionally, the communication device 110 may further include a transceiver 1105 and an antenna 1106. The transceiver 1105 may be referred to as a transceiving unit, a transceiver, or a transceiving circuit or the like for implementing a transceiving function. The transceiver 1105 may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the communication device 110 may further include one or more interface circuits 1107. The interface circuit 1107 is configured to receive and transmit the code instruction to the processor 1101. The processor 1101 executes the code instruction to enable the communication device 110 to perform the method described in any of the above method embodiments.

The communication device 110 is the terminal, the transceiver 1105 is configured to perform the step in block 21 in FIG. 2, or perform the step in block 31 in FIG. 3.

The communication device 110 is the access network device, the transceiver 1105 is configured to perform the steps in blocks 41 and 42 in FIG. 4, or perform the steps in blocks 51 to 54 in FIG. 5.

The communication device 110 is the core network device, the transceiver 1105 is configured to perform the step in block 61 in FIG. 6, the step in block 71 in FIG. 7, the step in block 81 in FIG. 8, or the step in block 91 in FIG. 9; and the processor 1101 is configured to perform the steps in blocks 72 and 73 in FIG. 7, the steps in blocks 82 and 83 in FIG. 8, or the step in block 92 in FIG. 9.

In an embodiment, the processor 1101 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In an embodiment, the processor 1101 may store a computer program 1103 that, when run on the processor 1101, enables the communication device 110 to perform the method described in any of the above method embodiments. The computer program 1103 may be solidified in the processor 1101, in which case the processor 1101 may be implemented in hardware.

In an embodiment, the communication device 110 may include a circuit that may perform the functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the network device or the terminal, but the scope of the communication device described in the present invention is not limited thereto and the construction of the communication device is not limited by FIG. 11. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal device, an intelligent terminal device, a cellular phone, a wireless device, a handset, a mobile unit, an on-vehicle device, a network device, a cloud device, an artificial intelligence device, etc.; (6) others.

In a case where the communication device may be the chip or the chip system, a block diagram of the chip shown in FIG. 12 may be referred to. The chip shown in FIG. 12 may include a processor 1201 and an interface 1202. There may be at least one processor 1201 and multiple interfaces 1202.

In a case where the chip is configured to realize functions of the terminal in the embodiments of the present invention, the interface 1202 is configured to perform the step in block 21 in FIG. 2, or perform the step in block 31 in FIG. 3.

In a case where the chip is configured to realize functions of the access network device in the embodiments of the present invention, the interface 1202 is configured to perform the steps in blocks 41 and 42 in FIG. 4, or perform the steps in blocks 51 to 54 in FIG. 5.

In a case where the chip is configured to realize functions of the core network device, the interface 1202 is configured to perform the step in block 61 in FIG. 6, the step in block 71 in FIG. 7, the step in block 81 in FIG. 8, or the step in block 91 in FIG. 9.

Optionally, the chip further includes a memory 1203 for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present invention.

The embodiments of the present invention further provides a system for reporting an uplink timing advance. The system includes the communication device as the terminal and the communication device as the network device in the aforementioned embodiment shown in FIG. 12, or the system includes the communication device as the terminal and the communication device as the network device in the aforementioned embodiment shown in FIG. 13.

The present invention further provides a readable storage medium storing thereon instructions that, and when executed by a computer, cause functions of any one of the above method embodiments to be realized.

The present invention further provides a computer program product that, when executed by the computer, cause functions of any one of the above method embodiments to be realized.

In the above embodiments, the present invention may be implemented in whole or in part by the hardware, software, firmware or their combination. When implemented in the software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of embodiments of the present invention, which also represent a sequential order.

"At least one" in the present invention may also be described as one or more, and "multiple" may be two, three, four, or more, and the present invention is not limited thereto. In embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present invention may be configured or predefined. Values of information in each table are merely examples, and may be configured as other values, which is not limited in the present invention. In a case of configuring the correspondence between the information and each parameter, it is not necessarily required that all the correspondences shown in each table must be configured. For example, the correspondence shown in certain rows in the tables in the present invention may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present invention may be understood as determined, predetermined, stored, pre-stored, pre-negotiated, pre-configured, cured, or pre-fired.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may be referred to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present application shall be in line with the attached claims.

## Claims

1. A positioning method, performed by a terminal, comprising:
sending first indication information to an access network device, wherein the first indication information is configured to indicate at least one of the followings: a type of the terminal, and positioning reference signaling measurement information.

2. The method of claim 1, wherein the positioning reference signaling measurement information is at least one of the followings:
a measured strength value of positioning reference signaling;
a measured time difference of arrival of the positioning reference signaling;
a calibrated strength value of the positioning reference signaling; and
a calibrated time difference of the arrival of the positioning reference signaling.

3. The method of claim 2, further comprising:
determining the calibrated strength value of the positioning reference signaling by calibrating the measured strength value of the positioning reference signaling according to the type of the terminal; or
determining the calibrated time difference of the arrival of the positioning reference signaling by calibrating the time difference of the arrival of the positioning reference signaling according to the type of the terminal.

4. A positioning method, performed by an access network device, comprising:
receiving first indication information from a terminal, wherein the first indication information is configured to indicate at least one of the followings: a type of the terminal, and positioning reference signaling measurement information; and
sending second indication information to a core network device, wherein the second indication information is generated according to the first indication information.

5. The method of claim 4, wherein the positioning reference signaling measurement information is a measured strength value of positioning reference signaling, and the method further comprises:
determining a calibrated strength value of the positioning reference signaling by calibrating the measured strength value of the positioning reference signaling according to the type of the terminal; and
generating the second indication information according to the calibrated strength value of the positioning reference signaling.

6. The method of claim 4, wherein the positioning reference signaling measurement information is a measured time difference of arrival of positioning reference signaling, and the method further comprises:
determining a calibrated time difference of the arrival of the positioning reference signaling by calibrating the measured time difference of the arrival of the positioning reference signaling according to the type of the terminal; and
generating the second indication information according to the calibrated time difference of the arrival of the positioning reference signaling.

7. The method of claim 4, wherein the second indication information is configured to indicate at least one of the followings: the type of the terminal, and the positioning reference signaling measurement information.

8. The method of any one of claims 4 to 7, wherein the positioning reference signaling measurement information is at least one of the followings:
a measured strength value of positioning reference signaling;
a measured time difference of arrival of the positioning reference signaling;
a calibrated strength value of the positioning reference signaling; and
a calibrated time difference of the arrival of the positioning reference signaling.

9. A positioning method, performed by a core network device, comprising:
receiving second indication information from an access network device, wherein the second indication information is configured to indicate at least one of the followings: a type of a terminal, and positioning reference signaling measurement information.

10. The method of claim 9, wherein the second indication information is configured to indicate the type of the terminal and the positioning reference signaling measurement information, wherein the positioning reference signaling measurement information is a positioning reference signaling measurement value, and the method further comprises:
determining a positioning algorithm according to the type of the terminal; and
determining a position of the terminal by processing the positioning reference signaling measurement value with the positioning algorithm.

11. The method of claim 9, wherein the second indication information is configured to indicate the type of the terminal and the positioning reference signaling measurement information, wherein the positioning reference signaling measurement information is a positioning reference signaling measurement value, and the method further comprises:
calibrating the positioning reference signaling measurement value according to the type of the terminal; and
determining a position of the terminal according to a calibrated positioning reference signaling measurement value.

12. The method of claim 10 or 11, wherein the positioning reference signaling measurement value comprises: a measured strength value of positioning reference signaling, or a measured time difference of arrival of the positioning reference signal.

13. The method of claim 9, wherein the second indication information is configured to indicate positioning reference signaling measurement information, wherein the positioning reference signaling measurement information is a calibrated positioning reference signaling measurement value, and the method further comprises:
determining a position of the terminal according to the calibrated positioning reference signaling measurement value.

14. The method of claim 13, wherein the calibrated positioning reference signaling measurement value comprises: a calibrated strength value of positioning reference signaling, or a calibrated time difference of arrival of the positioning reference signaling.

15. The method of any one of claims 9 to 14, wherein the positioning reference signaling measurement information is at least one of the followings:
a measured strength value of positioning reference signaling;
a measured time difference of arrival of the positioning reference signaling;
a calibrated strength value of the positioning reference signaling; and
a calibrated time difference of the arrival of the positioning reference signaling.

16. A communication device, provided at a terminal side, comprising:
a transceiving module configured to send first indication information to an access network device, wherein the first indication information is configured to indicate at least one of the followings: a type of the terminal, and positioning reference signaling measurement information.

17. The device of claim 16, wherein the positioning reference signaling measurement information is at least one of the followings:
a measured strength value of positioning reference signaling;
a measured time difference of arrival of the positioning reference signaling;
a calibrated strength value of the positioning reference signaling; and
a calibrated time difference of the arrival of the positioning reference signaling.

18. The device of claim 17, further comprising a processing module configured to:
determine the calibrated strength value of the positioning reference signaling by calibrating the measured strength value of the positioning reference signaling according to the type of the terminal; or
determine the calibrated time difference of the arrival of the positioning reference signaling by calibrating the time difference of the arrival of the positioning reference signaling according to the type of the terminal.

19. A positioning device, performed by an access network device, comprising:
a transceiving module configured to receive first indication information from a terminal, wherein the first indication information is configured to indicate at least one of the followings: a type of the terminal, and positioning reference signaling measurement information;
wherein the transceiving module is further configured to send second indication information to a core network device, wherein the second indication information is generated according to the first indication information.

20. The device of claim 19, wherein the device further comprises:
a processing module configured to determine a calibrated strength value of positioning reference signaling by calibrating a measured strength value of the positioning reference signaling according to the type of the terminal;
wherein the processing module is further configured to generate the second indication information according to the calibrated strength value of the positioning reference signaling.

21. The device of claim 19, wherein the processing module is further configured to:
determine a calibrated time difference of arrival of positioning reference signaling by calibrating a measured time difference of the arrival of the positioning reference signaling according to the type of the terminal; and
generate the second indication information according to the calibrated time difference of the arrival of the positioning reference signaling.

22. The device of claim 19, wherein the second indication information is configured to indicate at least one of the followings: the type of the terminal, and the positioning reference signaling measurement information.

23. The device of any one of claims 19 to 22, wherein the positioning reference signaling measurement information is at least one of the followings:
a measured strength value of positioning reference signaling;
a measured time difference of arrival of the positioning reference signaling;
a calibrated strength value of the positioning reference signaling; and
a calibrated time difference of the arrival of the positioning reference signaling.

24. A positioning device, performed by a core network device, comprising:
a transceiving module configured to receive second indication information from an access network device, wherein the second indication information is configured to indicate at least one of the followings: a type of a terminal, and positioning reference signaling measurement information.

25. The device of claim 24, further comprising:
a processing module configured to determine a positioning algorithm according to the type of the terminal;
wherein the processing module is further configured to determine a position of the terminal by processing a positioning reference signaling measurement value with the positioning algorithm.

26. The device of claim 24, wherein the processing module is further configured to:
calibrate a positioning reference signaling measurement value according to the type of the terminal; and
determine a position of the terminal according to a calibrated positioning reference signaling measurement value.

27. The device of claim 25 or 26, wherein the positioning reference signaling measurement value comprises: a measured strength value of positioning reference signaling, or a measured time difference of arrival of the positioning reference signal.

28. The device of claim 24, wherein the processing module is further configured to:
determine a position of the terminal according to a calibrated positioning reference signaling measurement value.

29. The device of claim 28, wherein the calibrated positioning reference signaling measurement value comprises: a calibrated strength value of positioning reference signaling, or a calibrated time difference of arrival of the positioning reference signaling.

30. The device of any one of claims 24 to 29, wherein the positioning reference signaling measurement information is at least one of the followings:
a measured strength value of positioning reference signaling;
a measured time difference of arrival of the positioning reference signaling;
a calibrated strength value of the positioning reference signaling; and
a calibrated time difference of the arrival of the positioning reference signaling.

31. A communication device, comprising:
a processor, and
a memory storing a computer program that, when executed by the processor, causes the method of any one of claims 1 to 15 to be implemented.

32. A computer-readable storage medium having stored therein instructions that, when executed, cause the method of any one of claims 1 to 15 to be implemented.
